# EUROPEAN PATENT APPLICATION

(11) **EP 4 403 296 A2**
(43) Date of publication of application: **24.07.2024**
(21) Application number: 24179952.7
(22) Date of filing: 11.04.2022
(51) Int. Cl.: B23K 37/047

(54) **SYSTEM FOR WELDING MULTIPLE BLANKS INTO A COMPONENT**

(30) Priority: 09.04.2021 US 202163173008 P
(62) Divisional of application: 22783755.6
(71) Applicant: Magna International Inc., Aurora, ON L4G 7K1 (CA)
(72) Inventor: MUTTON, Wayne, Milton, L9T 4Z7 (CA); HANSCHMANN, Florian, 2722 Weikersdorf (AT); MAKHAEVA, Anastasiia, 2722 Weikersdorf (AT)
(74) Representative: Grünecker Patent- und Rechtsanwälte PartG mbB

(57) **Abstract**

A method for welding blanks into a component such as a door ring, including providing first and second fixture subassemblies being at least partially moveable relative to one another. The method also includes positioning first and second blanks on the fixture subassemblies, and welding first and second components of the at least one of the first and second blanks to one another to form at least one of the first and second blanks. The method also includes fixing the first and second blanks to the first and second fixture subassemblies, and cutting adjacent edges of the first blank and the second blank along parallel lines. The method also includes moving at least part of one of the fixture assemblies toward the other until first and second sheared edges of the first and second blanks abut one another, and welding the first and second sheared edges to one another.

## Description

### CROSS REFERENCE TO RELATED APPLICATIONS

This PCT international patent application claims the benefit of U.S. Provisional Patent Application No. 63/173,008, filed April 9, 2021, entitled "System For Welding Multiple Blanks Into A Door Ring For An Automobile," the entire disclosure of which is hereby incorporated by reference in its entirety.

### TECHNICAL FIELD

The present disclosure relates to a system for welding. More particularly, the subject disclosure relates to a system for welding multiple blanks into a single component, such as a door ring for an automobile.

### BACKGROUND

Laser welding is known in manufacturing as an efficient and effective method of connecting two or more blanks, i.e., work pieces, to one another to form components. In a typical laser welding operation, a fixture assembly is provided for securing the blanks into a desired position during welding. The desired position typically includes two or more surfaces of the blanks disposed in alignment with one another such that a union between the blanks may be welded. Conventional fixture assemblies typically utilize a series of clamps for holding the blanks in place during welding. An issue with such fixture assemblies is that minor variations in blank dimensions can cause the blanks to be misaligned with one another once they are clamped in place, thus creating gaps that cannot be laser welded without adding additional material such as filler wire. Accordingly, excess time and materials are often required to execute a successful laser welding operation.

In an attempt to address this issue, and to correct tolerance stack-up issues with complex components, it is known to shear one or more of the blanks prior to being welded in order to provide a desired size and/or shape of an edge of the blank. According to this process, the blanks are removed from the fixture and mechanically sheared at a separate assembly, and then reintroduced to the fixture to make final welds along the sheared edges. However, it is known to be difficult to accurately reposition the blanks on the fixture, and such mechanical shearing operations can provide a rough / burred edge which can further create gaps between the blanks which can be difficult to bridge during welding without added filler. These issues can cause increased cycle time and costs, especially since the blanks typically have to be unclamped and relocated multiple times prior to welding.

Accordingly, there remains a need for improvements to such fixture assemblies.

### SUMMARY OF THE INVENTION

According to an aspect of the disclosure, a method for welding blanks into a component is provided. The method includes providing a first fixture subassembly and a second fixture subassembly, with at least part of one of the first and second fixture subassemblies being moveable relative to the other of the fixture subassemblies along a plane. The method also includes positioning a first blank on the first fixture subassembly, and positioning a second blank on the second fixture subassembly, wherein at least one of the first and second blanks is comprised of a first component and a second component. The method also includes welding the first and second components of the at least one of the first and second blanks to one another while positioned on one of the first and second fixture subassemblies to form the at least one of the first and second blanks. The method also includes fixing the first blank to the first fixture subassembly and fixing the second blank to the second fixture subassembly. The method also includes cutting adjacent edges of the first blank and the second blank along parallel lines to define a first sheared edge on the first blank and a second sheared edge on the second blank. The method also includes moving at least part of one of the first and second fixture subassemblies along the plane toward the other of the fixture subassemblies until the first and second sheared edges of the first and second blanks abut one another. The method also includes welding the first and second blanks to one another along the abutting first and second sheared edges.

The method also includes a method for welding blanks into a door ring of an automobile. The method includes providing a first fixture subassembly and a second fixture subassembly, with at least part of one of the first and second fixture subassemblies being moveable relative to the other of the fixture subassemblies along a plane. The method also includes positioning a first blank of the door ring on the first fixture subassembly, and positioning a second blank of the door ring on the second fixture subassembly, wherein at least one of the first and second blanks is comprised of a first component and a second component. The method also includes welding the first and second components of the at least one of the first and second blanks to one another while positioned on one of the first and second fixture subassemblies to form the at least one of the first and second blanks. The method also includes fixing the first blank to the first fixture subassembly and fixing the second blank to the second fixture subassembly. The method also includes cutting adjacent edges of the first blank and the second blank along parallel lines to define a first sheared edge on the first blank and a second sheared edge on the second blank. The method also includes moving at least part of one of the first and second fixture subassemblies along the plane toward the other of the fixture subassemblies until the first and second sheared edges of the first and second blanks abut one another. The method also includes welding the first and second blanks to one another along the abutting first and second sheared edges to provide the completed door ring.

Accordingly, the subject fixture assembly allows a component that is made of more than two blank components, such as a door ring, to be welded in a precise and repeatable process which does not require removal of any of the blank components from the fixture assembly during the process. More particularly, while on the fixture assembly, the subject system allows multiple components of the blanks to be welded to one another, it allows edges of the blanks to be requalified by shearing, and then it allows the blanks to be moved toward one another in a single direction to provide a flush union between the sheared edges for welding. Because the blanks can be sheared and welded as a final step without leaving the fixture, tolerance stack up issues associated with prior art assemblies are eliminated. Furthermore, because the blanks remain on the fixture throughout the process and movements of the fixture are limited, a single shearing and welding assembly, such as a laser welder and a laser cutter, with trackable movements, such as on a robotic arm, may be employed. This requires the movements of few components to be tracked, thereby allowing cutting and part trim locations to be reliably tracked throughout the shearing and welding process, and providing a known welding path for all welds. In other words, the system provides reduced variables and eliminates potential for errors.

### BRIEF DESCRIPTION OF THE DRAWINGS

Other advantages of the present invention will be readily appreciated, as the same becomes better understood by reference to the following detailed description when considered in connection with the accompanying drawings wherein:
FIG. 1A is a top view of an example embodiment of a fixture assembly, illustrating the fixture assembly without any blanks positioned thereon;
FIG. 1B is a side schematic view of an example robot and associated shearing device and welding device that may be used in conjunction with the fixture assembly;
FIG. 2 is a top view of the fixture assembly, illustrating a plurality of bank components positioned on the fixture assembly in an unclamped position;
FIG. 3 is a top view of the fixture assembly, illustrating the blanks after blank components have been welded to one another, and illustrating the blanks positioned on the fixture in a clamped position;
FIG. 4 is a top view of the fixture assembly, illustrating the blanks in a position in which sheared edges of the blanks engage one another such that the sheared edges may be welded to one another;
FIG. 5 is a top view of the fixture assembly, illustrating a completed door ring that was fabricated in accordance with a method of the subject disclosure;
FIGS. 6A-6B are side views of a door ring after a welding operation, illustrating example materials of blank components;
FIGS. 7A-7B are side views of a door ring after a welding operation, illustrating example gauge thicknesses of blank components; and
FIG. 8 is a flow diagram illustrating a method of using the fixture assembly to fabricate a component out of a plurality of blanks.

### DESCRIPTION OF THE ENABLING EMBODIMENT

Referring to the figures, wherein like numerals indicate corresponding parts throughout the several views, a fixture assembly 10 is provided for forming a component, such as a door ring 12 for an automobile out of a plurality of blanks 14, 16. According to the example embodiment, the blanks 14, 16 are sheets of steel, however, it should be appreciated that various types of blanks may be employed. As further illustrated, the blanks 14, 16 may initially be comprised of a plurality of blank components 14A-C, 16A-C that may together be formed to provide the blanks 14, 16. It should be appreciated that the blanks 13, 16 and associated blank components 14A-C, 16A-C may have various shapes and sizes for ultimately providing different components. Additionally, it should be appreciated that any number of blanks and blank components could be used depending on specific applications.

According to the example embodiment, laser shearing and laser welding methods are employed to cut and weld the blanks 14, 16, however, it should be appreciated that the fixture assembly 10 and associated method may be used in conjunction with other types of shearing and welding systems.

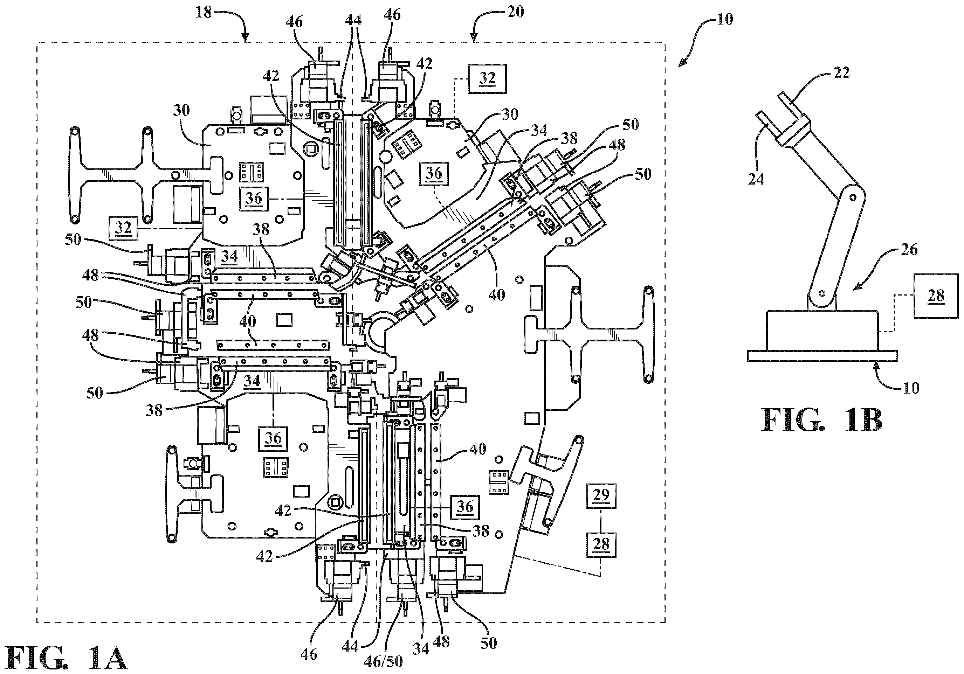

With reference to FIG. 1A, the fixture assembly 10 is generally shown. The fixture assembly 10 may be arranged in an operation cell. The fixture assembly 10 includes a first fixture subassembly 18 and a second fixture subassembly 20 that are configured to hold and selectively move the blanks 14, 16 during cutting and welding operations. The system also includes a shearing device 22 (schematically shown in FIG. 1B) for shearing / cutting the blanks, and a welding device 24 (schematically shown in FIG. 1B) for welding the blanks 14, 16. According to the example embodiment, the shearing device 22 is a laser cutter, and the welding device 24 is a laser welder, but other shearing and welding devices could be employed without departing from the scope of the subject disclosure. It should be appreciated that an edge shape of a blank cut with a laser shearing device does not have roll and brake characteristics commonly associated with traditional mechanically sheared edges. The shearing and welding devices 22, 24 may be manually moveable, or moveable by way of a machine device such as a robotic arm 26.

The various actuators discussed herein and the shearing and welding devices 22, 24 and associated robotic arm 26 (or other moving mechanism) are electrically connected to a controller 28 (schematically shown in FIG. 1A) for receiving instructions from the controller 28. The controller 28 may actively provide instructions from an operator and/or may be programmed with predetermined instructions. The various actuators discussed herein may be various styles of actuators including, but not limited to, servo, pneumatic and hydraulic driven actuators, without departing from the scope of the subject disclosure.

According to an embodiment, the robotic arm 26 may be a five-axis robotic arm that is configured to move in any direction in response to instructions from the controller 28. Three-dimensional coordinates of the shearing and welding devices 22, 24 on the robotic arm 26 may be tracked by the controller 28. The shearing and welding devices 22, 24 may be configured as two heads on the robotic arm 26. Furthermore, a location tracking system 29 (schematically shown), e.g., cameras and sensors, may be employed to track movements of all components of the subject fixture assembly 10 and blanks 14, 16 in order to aid in identifying cutting and welding locations and movements of the various components of the fixture assembly 10. These location tracking capabilities allow cutting and welding outputs to be locationally tracked by the controller 28 at all times, which provides repeatable shearing and welding operations. In other words, the location tracking mechanism 29 allows the cutting and thereby blank trim locations to absolutely be known within the machine and always accurate to one another. This information may also be used to provide predetermined welding paths for final welds.

With continued reference to FIG. 1A, the first and second fixture subassemblies 18, 20 each include a lower portion that is fixed to a support surface such as a floor, and an upper portion 30 that is moveable relative to the lower portion along a plane. Alternatively, the fixture assembly 10 could be configured such that only one of the fixture subassemblies includes a moveable upper portion 30. One or more fixture actuators 32 (schematically shown) are provided for moving the upper portion 30 of the first and / or second fixture subassemblies 18, 20. It should be appreciated that the moveable upper portion 30 may be configured to be moveable only in single directions which edges of the blanks 14, 16 to be moved toward one another to provide more simple tracking of the fixture subassemblies. It should also be appreciated that the entire fixture subassemblies 18, 20 could be configured to move, instead of just an upper portion 30 thereof so long as they are capable of moving the blanks 14, 16 relative to one another.

Each of the fixture subassemblies 18, 20 includes two moveable blank supports 34 that are moveably connected to the upper portion 30 in directions parallel to the plane, and configured to support and provide movement to the components 14A-C, 16A-C of the blanks 14, 16. The blank supports 34 could also be configured to rotate. A plurality of blank support actuators 36 (schematically shown) are each configured to move one of the moveable blank supports 34 in any direction parallel to the plane. A plurality of moving support plates 38 are fixed to, and moveable with the moveable blank supports 34. The moving support plates 38 each have a planar top surface for supporting the blanks 14, 16 during use of the fixture assembly 10.

Each of the fixture subassemblies 18, 20 also includes a plurality of stationary support plates 40 fixed to the upper portion 30. Like the moving support plates 38, the stationary support plates 40 have a planar top surface for supporting the blanks 14, 16 during use of the fixture assembly 10.

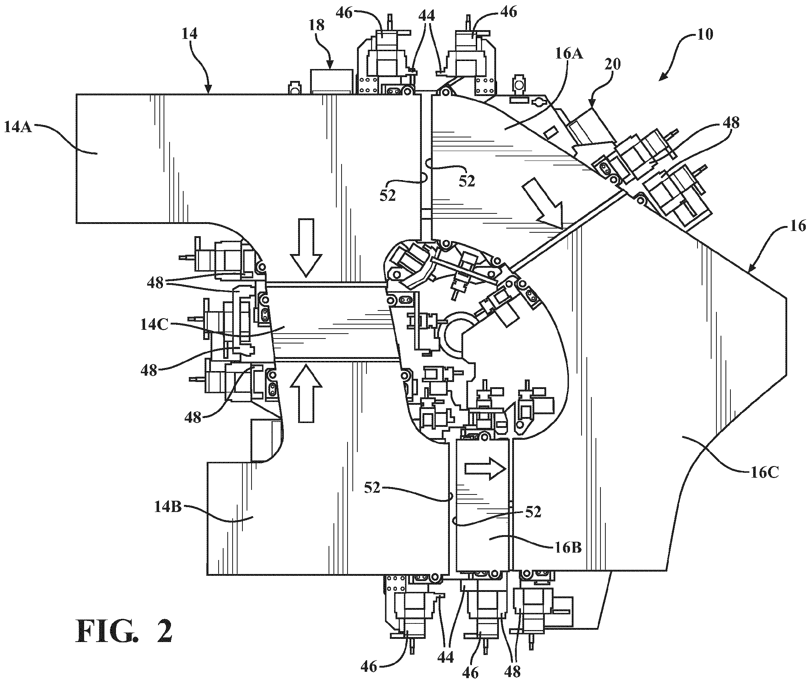

Each of the fixture subassemblies 18, 20 further includes a pair of electromagnets 42, each positioned on one of the moveable blank supports 34 such that they are moveable with the moveable blank supports 34. The electromagnets 42 each have a planar top surface for supporting one of the blanks 14, 16. The electromagnets 42 are configured to draw the blanks 14, 16 toward the top surface when activated in order to ensure that the blanks 14, 16 remain flat and do not move during cutting, welding and blank moving operations. According to the example embodiment, the electromagnets 42 are each located adjacent to an edge of the upper portion 30 and extend parallel with another of the electromagnets 42 such that the electromagnets 42 may position edges of the blanks 14, 16 on opposing fixture subassemblies 18, 20 in adjacent spaced and parallel relationship with one another (as shown in FIG. 2).

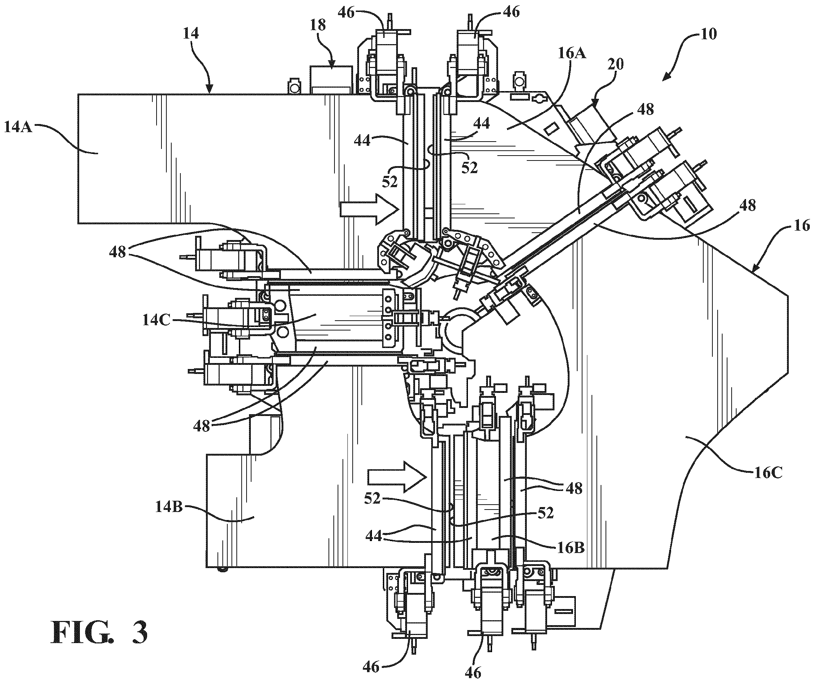

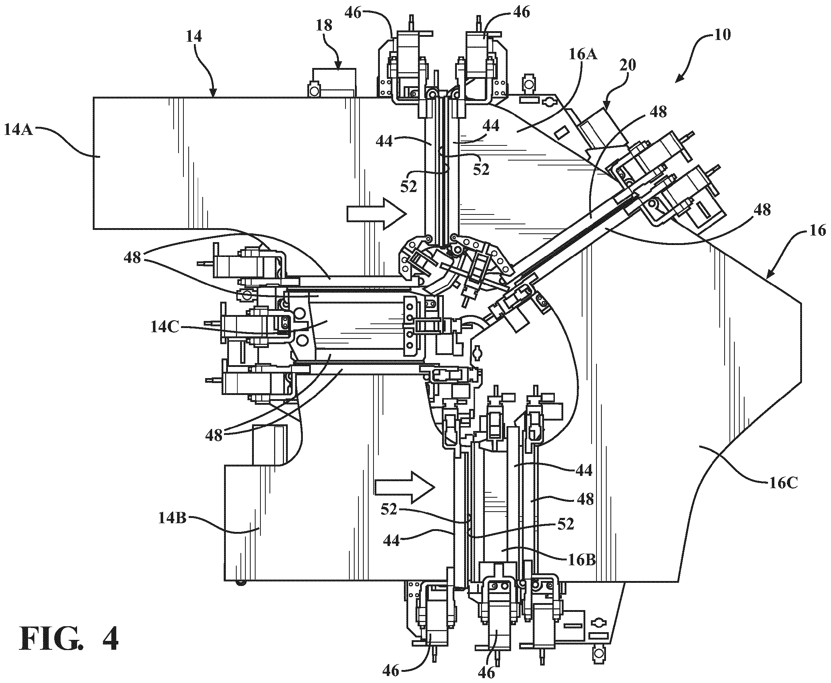

Each of the fixture subassemblies 18, 20 also includes a plurality of intensifiers 44 that are each configured to selectively overlie one of the electromagnets 42 to intensify a magnetic field of the electromagnets 42 to ensure that while the blanks 14, 16 overlie the electromagnets 42, they remain flat and do not move during cutting and welding operations. More particularly, the intensifiers 44 are of a ferromagnetic material such that when they overlie the electromagnets and blanks 14, 16, they are drawn toward the electromagnet 42 and thus clamp the blank 14, 16 that is positioned between the intensifier 44 and electromagnet 42 in place (see, e.g., FIGS. 3, 4). A plurality of intensifier actuators 46 are each configured to selectively pivot one of the intensifiers 44 over the electromagnets 42. For example, FIG. 2 shows the intensifiers 44 in a vertical position in which they do not overlie the electromagnets 42, and FIG. 3 shows the intensifiers 44 in a horizontal position in which they overlie the electromagnets 42. According to the example embodiment, the intensifier actuators 46 are pneumatic cylinders, but other types of actuators could be employed without departing from the scope of the subject disclosure.

Similar to the intensifiers 44, the fixture assembly 10 further includes a plurality of clamp arms 48 that are each configured to selectively overly one of the support plates 38, 40 to further ensure that the blanks 14, 16 remain flat and do not move during cutting, welding and blank moving operations. A plurality of clamp actuators 50 are configured to selectively pivot the clamp arms 48 over the support plates 38, 40. For example, FIG. 3 shows the clamp arms 48 in a vertical position in which they do not overlie the support plates 38, 40, and FIG. 3 shows the clamp arms 48 in a horizontal position in which they overlie the support plates 38, 40. Again, the clamp actuators 50 of the example embodiment are pneumatic cylinders, but other actuators could be used.

It should be appreciated that any combination of electromagnets 42 and associated intensifiers 44, and support plates 38, 40 and associated clamp arms 48 could be employed to hold the blanks 14, 16 in different regions of the fixture assembly 10 depending on specific needs. In the example embodiment, the electromagnets 42 and intensifiers 44 are used at the edge regions of the fixture subassemblies 18, 20 because shearing and welding of blanks 14, 16 occurs at the edge regions, which mandates a very secure connection.

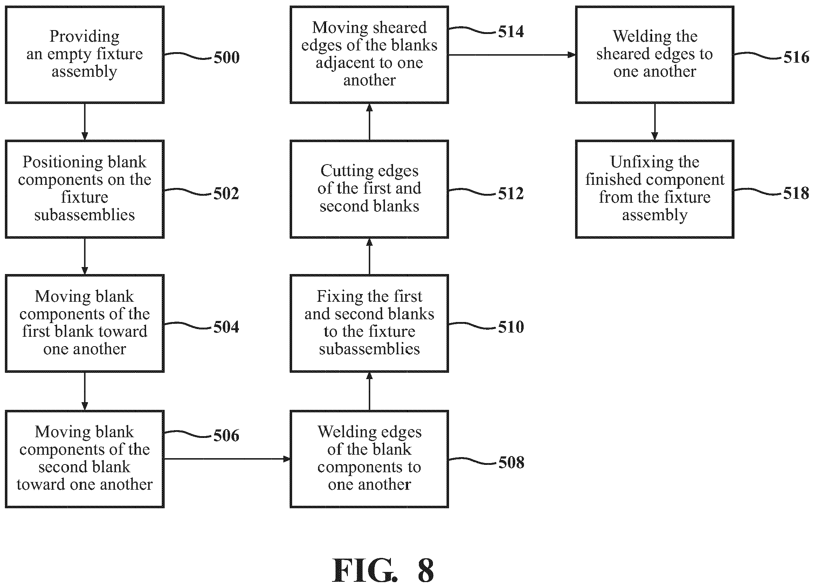

FIG. 8 is a flow diagram illustrating a method of using the subject fixture assembly 10 to fabricate a component out of a plurality of blanks 14, 16.

With reference to FIGS. 8 and 1A, the method starts with 500 providing an empty fixture assembly 10. As illustrated in in FIG. 2, the method continues with 502 positioning a plurality of blank components 14A-C, 16A-C on the first and second fixture subassemblies 18, 20 of the fixture assembly 10. More particularly, as shown, a first component 14A of the first blank 14 is positioned such that it rests on an electromagnet 42 and one of the moving support plates 38, with an edge thereof positioned along an edge of the first fixture subassembly 18 along a gap between the first and second fixture subassemblies 18, 20. Likewise, a second component 14B of the first blank 14 is positioned in the same manner on the other of the electromagnets 42 and another of the moving support plates 38. A third component 14C of the first blank 14 is positioned on two of the stationary support plates 40, Because the first and second components 14A, 14B of the first blank 14 reside on moveable blank supports 34, they are moveable relative to the third component 14C of the first blank 14. As illustrated, first, second and third components 16A-C of the second blank 16 are arranged in the same manner as the first, second and third components 14A-C of the first fixture subassembly 18, only on the second fixture subassembly 20. It should be appreciated that the specific sizes and orientations of the electromagnets 42 and support plates 38, 40 may vary depending on shapes and sizes of the blank components, and more or fewer electromagnets 42 and support plates 38, 40 could be used depending on how many blank components are used, and their shapes and sizes.

As illustrated by arrows in FIG. 2, the method continues with 504 moving the first and second components 14A, 14B of the first blank 14 toward the fixed third component 14C of the first blank 14 by way of the moveable blank supports 34 and associated blank support actuators 36 such that edges of the first and second components 14A, 14B lie flush against edges of the third component 14C. The method continues with 506 moving the first and second components 16A, 16B, 16C of the second blank 16 in the same manner. The method continues with 508 welding the engaging edges of the first and second components 14A-B, 16A-B to the edges of the third component 14C, 16C on each of the first and second blanks 14, 16 in order to provide completed first and second blank components 14, 16.

As shown in FIG. 3, the method continues with 510 fixing the first and second blanks 14, 16 in place on the first and second fixture subassemblies 18, 20. According to the example embodiment, this includes activating the electromagnets 42 and pivoting the intensifiers 44 and clamp arms 48 over the first and second blanks 14, 16. The method continues with 512 cutting parallel and adjacent edges 52 of the first and second blanks 14, 16 with the shearing device 22 to define sheared edges 52 along each of the first and second blanks 14, 16.

As illustrated by arrows in FIG. 3, the method continues with 514 moving the first fixture subassembly 18 toward the second fixture subassembly 20 such that the sheared edges 52 of the first and second blanks 14, 16 are positioned flush against one another. More particularly, according to the example embodiment, the upper portion 30 of the first fixture subassembly 18 is moved toward the upper portion 30 of the second fixture subassembly 20, with the fixture actuator 32. However, it should be appreciated that other combinations of moving components could be employed to align the sheared edges 52 of the first and second blanks 14, 16 with one another. For example, the upper portions 30 of both fixture subassemblies 18, 20 could be moved toward one another, or one or both of the entire fixture subassemblies 18, 20 could be moved toward one another. Furthermore, as illustrated in FIG. 3, the fixture subassemblies 18 could be configured such that they are only capable of moving the blanks 14, 16 at this step in a horizontal directions toward one another, thereby simplifying tracking of the sheared edges 52 of the blanks 14, 16 to provide more reproducible and predictable welding operations, and simplifying the type of actuator used.

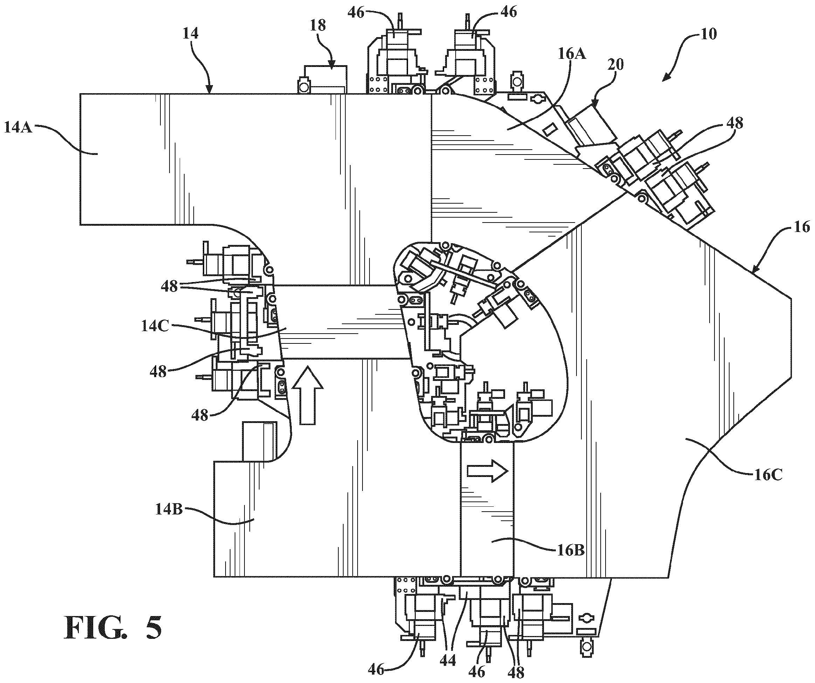

The method continues with 516 welding the first and second sheared edges 52 to one another with the welding device 24 to form the final component, in this case a door ring 12. Finally, as shown in FIG. 5 the method includes 518 unfixing the finished component 12 from the fixture assembly 10. According to the example embodiment, this includes deactivating the electromagnets 42 and releasing the intensifiers 44 and clamp arms 48.

Throughout the method, the controller 28 and tracking system 29 may be employed to track the locations of the shearing and welding devices 22, 24, the blanks 14, 16, notably the edges 52 of the blanks 14, 16, as well as the movable components of the fixture assembly 10 in order to permit the above-referenced method to repeatedly be produced either manually or automatically via instructions from the controller 28. Notably the tracking system 29 may be employed to actively adjust the various moving components based on present locations and to guide the shearing and welding devices 22, 24.

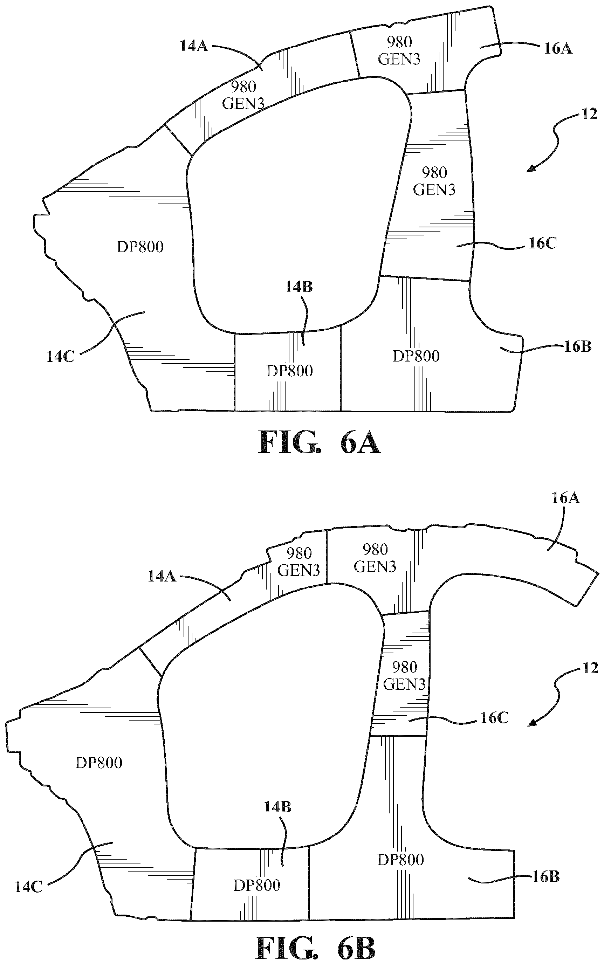

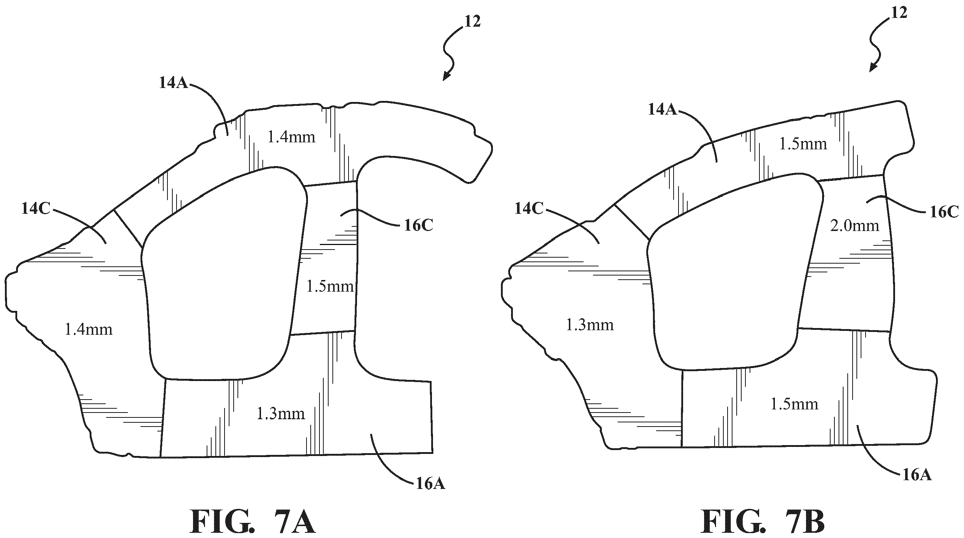

With reference to FIGS. 6A-6B, the blank components 14A-C, 16A-C may be comprised of different materials than one another for providing different characteristics at different locations of the door ring 12, for example, to provide different strength and weight attributes along different regions. For example, the three uppermost blank components 14A, 16A, 16C may be made of an uncoated material, and the three lowermost blanks 14C, 14B, 16B can be made of a hot-dipped / coated material. FIGS. 6A and 6B further illustrate that the blanks 14, 16 and blank components 14A-C, 16A-C may have various shapes depending on specific applications. With reference to FIGS. 7A-7B, the blank components 14A, 14C, 16A, 16C may be of different thicknesses / gauge to provide different strength and weight characteristics at different regions. Furthermore, it should be appreciated that the blanks 14, 16 may be cold-stamped prior to connection with one another. Furthermore, as illustrated in FIGS. 7A-7B fewer blank components may be employed to arrive at the final component, like the four piece assembly shown.

In view of the above and in accordance with the present system, laser cutting and welding may be performed on the component 12 with all components connected to a single fixture assembly 10. As such, cutting and welding locations are easily tracked throughout the process, thereby providing faster cycle times and the elimination of tolerance stack-up issues. This is contrary to conventional systems for welding door ring blanks where blanks are removed from a fixture assembly prior to welding to be sheared and then reintroduced to the fixture a second time. Furthermore, because the blanks are positioned on the fixture assembly throughout the process, a single direction movement may be employed to bring the edges 52 of the first and second blanks 14, 16 in proximity to one another for welding. Moreover, the electromagnets 42 and intensifiers 44 and clamp arms 48 may remain active to ensure that the blanks 14, 16 do not move relative to one another during shearing and welding, and thus only easily trackable movements of the shearing and welding devices 22, 24 and blanks 14, 16 are required. This renders only movement of the shearing and welding devices 22, 24 as the primary feature that requires tracking throughout the process, and substantially the only potential source for error. Furthermore, because a common axis may be used for both the shearing and welding devices 22, 24, shearing locations are easily trackable and location information can be used for easily identifying welding paths.

Obviously, many modifications and variations of the present invention are possible in light of the above teachings and may be practiced otherwise than as specifically described while within the scope of the appended claims. These antecedent recitations should be interpreted to cover any combination in which the inventive novelty exercises its utility.

### Further Embodiments of the invention are as follows

1. A method for welding blanks into a component, comprising:
   providing a first fixture subassembly and a second fixture subassembly, wherein at least part of one of the first and second fixture subassemblies is moveable relative to the other of the first and second fixture subassemblies along a plane;
   positioning a first blank on the first fixture subassembly, and positioning a second blank on the second fixture subassembly, wherein at least one of the first and second blanks includes a first component and a second component;
   welding the first and second components of the at least one of the first and second blanks to one another while positioned on the one of the first and second fixture subassemblies to form the at least one of the first and second blanks;
   fixing the first blank to the first fixture subassembly and fixing the second blank to the second fixture subassembly;
   cutting adjacent edges of the first blank and the second blank along parallel lines to define a first sheared edge on the first blank and a second sheared edge on the second blank;
   moving at least part of one of the first and second fixture subassemblies along the plane toward the other of the first and second fixture subassemblies until the first and second sheared edges of the first and second blanks abut one another; and
   welding the first and second blanks to one another along the abutting first and second sheared edges.
2. The method of Embodiment 1, wherein each of the first and second blanks includes a first component and a second component, and wherein welding the first and second components of the at least one of the first and second blanks to one another includes welding the first and second components of the first blank to one another, and welding the first and second components of the second blank to one another.
3. The method of Embodiment 2, wherein the first fixture subassembly includes a base, a moveable blank support being moveable relative to the first base, and a stationary blank support being fixed relative to the first base;
   wherein the second fixture subassembly includes a second base, a moveable blank support being moveable relative to the second base, and a stationary blank support being fixed relative to the second base;
   wherein prior to welding the first and second components of the first and second blanks, the method includes positioning the first component of the first blank on the moveable blank support of the first fixture assembly, positioning the second component of the first blank on the stationary blank support of the first fixture assembly, and moving the moveable blank support of the first fixture assembly toward the stationary blank support of the first fixture assembly such that edges of the first and second components of the first blank abut one another;
   wherein prior to welding the first and second components of the first and second blanks, the method further includes positioning the first component of the second blank on the moveable blank support of the second fixture assembly, positioning the second component of the second blank on the stationary blank support of the second fixture assembly, and moving the moveable blank support of the second fixture assembly toward the stationary blank support of the second fixture assembly such that edges of the first and second components of the second blank abut one another.
4. The method of Embodiment 1, wherein the first fixture assembly includes a first electromagnet having an upper surface being substantially planar located adjacent to a region of the first sheared surface,
   wherein securing the first blank to the first fixture assembly includes overlying the first blank over the upper surface of the first fixture assembly and activating the first electromagnet such that the first blank is drawn toward the upper surface of the first electromagnet to prevent the first blank from moving during cutting of the first sheared surface and welding of the first and second sheared surfaces;
   wherein the second fixture assembly includes a second electromagnet having an upper surface being substantially planar located adjacent to a region of the second sheared surface;
   wherein securing the second blank to the second fixture assembly includes overlying the second blank over the upper surface of the second fixture assembly and activating the second electromagnet such that the second blank is drawn toward the upper surface of the second electromagnet to prevent the second blank from moving during cutting of the second sheared surface and welding of the first and second sheared surfaces.
5. The method of Embodiment 4, wherein securing the first blank to the first fixture assembly further includes overlying an intensifier over the first blank in alignment with the first electromagnet to intensify a magnetic field of the first electromagnet to further inhibit movement of the first blank during cutting of the first sheared surface and welding of the first and second surfaces;
   wherein securing the second blank to the second fixture assembly further includes overlying an intensifier over the second blank in alignment with the second electromagnet to intensify a magnetic field of the second electromagnet to further inhibit movement of the second blank during cutting of the second sheared surface and welding of the first and second surfaces.
6. The method of Embodiment 1, wherein cutting edges of the first blank and the second blank includes laser cutting the edges of the first blank and the second blank.
7. The method of Embodiment 1, wherein welding the first and second blanks to one another along the abutting first and second sheared edges includes laser welding the first and second sheared edges to one another.
8. The method of Embodiment 1, wherein a shearing device for the step of cutting, and a welding device for the step of welding are located on a single robot arm, and wherein movement of the cutting and welding devices with the robot arm is trackable relative to the fixture assembly.
9. A method for welding blanks into a door ring of an automobile, comprising:
   providing a first fixture subassembly and a second fixture subassembly, wherein at least part of one of the first and second fixture subassemblies being moveable relative to the other of the fixture assemblies along a plane;
   positioning a first blank of the door ring on the first fixture subassembly, and positioning a second blank of the door ring on the second fixture subassembly, wherein at least one of the first and second blanks includes a first component and a second component;
   welding the first and second components of the at least one of the first and second blanks to one another while positioned on one of the first and second fixture subassemblies to form the at least one of the first and second blanks;
   fixing the first blank to the first fixture subassembly and fixing the second blank to the second fixture subassembly;
   cutting adjacent edges of the first blank and the second blank along parallel lines to define a first sheared edge on the first blank and a second sheared edge on the second blank;
   moving at least part of one of the first and second fixture subassemblies along the plane toward the other of the first and second fixture subassemblies until the first and second sheared edges of the first and second blanks abut one another; and
   welding the first and second blanks to one another along the abutting first and second sheared edges to provide the completed door ring.
10. The method of Embodiment 9, wherein each of the first and second blanks of the door ring includes a first component and a second component, and wherein welding the first and second components of the at least one of the first and second blanks to one another includes welding the first and second components of the first blank to one another, and welding the first and second components of the second blank to one another.
11. The method of Embodiment 10, wherein the first fixture subassembly includes a base, a moveable blank support being moveable relative to the first base, and a stationary blank support being fixed relative to the first base;
   wherein the second fixture subassembly includes a second base, a moveable blank support being moveable relative to the second base, and a stationary blank support being fixed relative to the second base;
   wherein prior to welding the first and second components of the first and second blanks, the method includes positioning the first component of the first blank on the moveable blank support of the first fixture assembly, positioning the second component of the first blank on the stationary blank support of the first fixture assembly, and moving the moveable blank support of the first fixture assembly toward the stationary blank support of the first fixture assembly such that edges of the first and second components of the first blank abut one another;
   wherein prior to welding the first and second components of the first and second blanks, the method further includes positioning the first component of the second blank on the moveable blank support of the second fixture assembly, positioning the second component of the second blank on the stationary blank support of the second fixture assembly, and moving the moveable blank support of the second fixture assembly toward the stationary blank support of the second fixture assembly such that edges of the first and second components of the second blank abut one another.
12. The method of Embodiment 9, wherein the first fixture assembly includes a first electromagnet having an upper surface being substantially planar located adjacent to a region of the first sheared surface,
   wherein securing the first blank of the door ring to the first fixture assembly includes overlying the first blank over the upper surface of the first fixture assembly and activating the first electromagnet such that the first blank is drawn toward the upper surface of the first electromagnet to prevent the first blank from moving during cutting of the first sheared surface and welding of the first and second sheared surfaces;
   wherein the second fixture assembly includes a second electromagnet having an upper surface being substantially planar located adjacent to a region of the second sheared surface;
   wherein securing the second blank of the door ring to the second fixture assembly includes overlying the second blank over the upper surface of the second fixture assembly and activating the second electromagnet such that the second blank is drawn toward the upper surface of the second electromagnet to prevent the second blank from moving during cutting of the second sheared surface and welding of the first and second sheared surfaces.
13. The method of Embodiment 12, wherein securing the first blank of the door ring to the first fixture assembly further includes overlying an intensifier over the first blank in alignment with the first electromagnet to intensify a magnetic field of the first electromagnet to further inhibit movement of the first blank during cutting of the first sheared surface and welding of the first and second surfaces;
   wherein securing the second blank of the door ring to the second fixture assembly further includes overlying an intensifier over the second blank in alignment with the second electromagnet to intensify a magnetic field of the second electromagnet to further inhibit movement of the second blank during cutting of the second sheared surface and welding of the first and second surfaces.
14. The method of Embodiment 9, wherein cutting edges of the first blank of the door ring and the second blank of the door ring includes laser cutting the edges of the first blank and the second blank.
15. The method of Embodiment 9, wherein welding the first and second blanks of the door ring to one another along the abutting first and second sheared edges includes laser welding the first and second sheared edges to one another.
16. The method of Embodiment 9, wherein a shearing device for the step of cutting, and a welding device for the step of welding are located on a single robot arm, and wherein movement of the cutting and welding devices with the robot arm is trackable relative to the fixture assembly.

## Claims

1. A method for welding blanks into a door ring of an automobile, comprising:
providing a first fixture subassembly and a second fixture subassembly, wherein at least part of one of the first and second fixture subassemblies being moveable relative to the other of the fixture assemblies along a plane;
positioning a first blank of the door ring on the first fixture subassembly, and positioning a second blank of the door ring on the second fixture subassembly, wherein at least one of the first and second blanks includes a first component and a second component;
welding the first and second components of the at least one of the first and second blanks to one another while positioned on one of the first and second fixture subassemblies to form the at least one of the first and second blanks;
fixing the first blank to the first fixture subassembly and fixing the second blank to the second fixture subassembly;
cutting adjacent edges of the first blank and the second blank along parallel lines to define a first sheared edge on the first blank and a second sheared edge on the second blank;
moving at least part of one of the first and second fixture subassemblies along the plane toward the other of the first and second fixture subassemblies until the first and second sheared edges of the first and second blanks abut one another; and
welding the first and second blanks to one another along the abutting first and second sheared edges to provide the completed door ring.

2. The method of Claim 1, wherein each of the first and second blanks of the door ring includes a first component and a second component, and wherein welding the first and second components of the at least one of the first and second blanks to one another includes welding the first and second components of the first blank to one another, and welding the first and second components of the second blank to one another.

3. The method of Claim 2, wherein the first fixture subassembly includes a base, a moveable blank support being moveable relative to the first base, and a stationary blank support being fixed relative to the first base;
wherein the second fixture subassembly includes a second base, a moveable blank support being moveable relative to the second base, and a stationary blank support being fixed relative to the second base;
wherein prior to welding the first and second components of the first and second blanks, the method includes positioning the first component of the first blank on the moveable blank support of the first fixture assembly, positioning the second component of the first blank on the stationary blank support of the first fixture assembly, and moving the moveable blank support of the first fixture assembly toward the stationary blank support of the first fixture assembly such that edges of the first and second components of the first blank abut one another;
wherein prior to welding the first and second components of the first and second blanks, the method further includes positioning the first component of the second blank on the moveable blank support of the second fixture assembly, positioning the second component of the second blank on the stationary blank support of the second fixture assembly, and moving the moveable blank support of the second fixture assembly toward the stationary blank support of the second fixture assembly such that edges of the first and second components of the second blank abut one another.

4. The method of Claim 1, wherein the first fixture assembly includes a first electromagnet having an upper surface being substantially planar located adjacent to a region of the first sheared surface,
wherein securing the first blank of the door ring to the first fixture assembly includes overlying the first blank over the upper surface of the first fixture assembly and activating the first electromagnet such that the first blank is drawn toward the upper surface of the first electromagnet to prevent the first blank from moving during cutting of the first sheared surface and welding of the first and second sheared surfaces;
wherein the second fixture assembly includes a second electromagnet having an upper surface being substantially planar located adjacent to a region of the second sheared surface;
wherein securing the second blank of the door ring to the second fixture assembly includes overlying the second blank over the upper surface of the second fixture assembly and activating the second electromagnet such that the second blank is drawn toward the upper surface of the second electromagnet to prevent the second blank from moving during cutting of the second sheared surface and welding of the first and second sheared surfaces.

5. The method of Claim 4, wherein securing the first blank of the door ring to the first fixture assembly further includes overlying an intensifier over the first blank in alignment with the first electromagnet to intensify a magnetic field of the first electromagnet to further inhibit movement of the first blank during cutting of the first sheared surface and welding of the first and second surfaces;
wherein securing the second blank of the door ring to the second fixture assembly further includes overlying an intensifier over the second blank in alignment with the second electromagnet to intensify a magnetic field of the second electromagnet to further inhibit movement of the second blank during cutting of the second sheared surface and welding of the first and second surfaces.

6. The method of Claim 1, wherein cutting edges of the first blank of the door ring and the second blank of the door ring includes laser cutting the edges of the first blank and the second blank.

7. The method of Claim 1, wherein welding the first and second blanks of the door ring to one another along the abutting first and second sheared edges includes laser welding the first and second sheared edges to one another.

8. The method of Claim 1, wherein a shearing device for the step of cutting, and a welding device for the step of welding are located on a single robot arm, and wherein movement of the cutting and welding devices with the robot arm is trackable relative to the fixture assembly.
